# EUROPÄISCHE PATENTSCHRIFT

(11) **EP 1 373 385 B1**
(45) Veröffentlichungstag und Bekanntmachung des Hinweises auf die Patenterteilung: **09.05.2012**
(21) Anmeldenummer: 02719987.6
(22) Anmeldetag: 08.03.2002
(51) Int. Cl.: C08K 3/00, C09D 153/00

(54) **VON FLÜCHTIGEN ORGANISCHEN VERBINDUNGEN FREIE ODER IM WESENTLICHEN FREIE, WÄSSRIGE DISPERSIONEN, VERFAHREN ZU IHRER HERSTELLUNG UND IHRE VERWENDUNG**
AQUEOUS DISPERSIONS THAT ARE FREE OR SUBSTANTIALLY FREE FROM VOLATILE ORGANIC COMPOUNDS, AND METHOD FOR THEIR PRODUCTION AND USE THEREOF
DISPERSIONS AQUEUSES LIBRES OU ESSENTIELLEMENT LIBRES DE COMPOSES ORGANIQUES VOLATILS, PROCEDE DE FABRICATION ET UTILISATION

(30) Priorität: 29.03.2001 DE 10115592
(43) Veröffentlichungstag der Anmeldung: 02.01.2004
(73) Patentinhaber: BASF Coatings GmbH, 48165 Münster (DE)
(72) Erfinder: BREMSER, Wolfgang, 48165 Münster (DE); STEINER, Hans-Peter, 48324 Sendenhorst (DE); STRICKMANN, Frank, 48565 Steinfurt (DE)
(74) Vertreter: Leifert & Steffan
(86) Internationale Anmeldenummer: PCT/EP2002/002546
(87) Internationale Veröffentlichungsnummer: WO 2002/079308

(56) Entgegenhaltungen:
- DE-A- 19 930 067

## Beschreibung

Die vorliegende Erfindung betrifft gemäß Anspruch 1 Außerdem betrifft die vorliegende Erfindung ein Verfahren zur Herstellung von diesen wäßrigen Dispersionen. Desweiteren betrifft die vorliegende Erfindung die Verwendung dieser wäßrigen Dispersionen als neue Beschichtungsstoffe, Klebstoffe und Dichtungsmassen oder zu deren Herstellung. Nicht zuletzt betrifft die vorliegende Erfindung die Verwendung der neuen Beschichtungsstoffe, Klebstoffe und Dichtungsmassen für das Lackieren, Verkleben und Abdichten von Kraftfahrzeugkarosserien und Teile hiervon, Bauwerken im Innen- und Außenbereich, Türen, Fenstern und Möbeln sowie für das Lackieren, Verkleben und Abdichten im Rahmen der industriellen Lackierung, inklusive Coils, Container, elektrotechnische Bauteile und weiße Ware.

Die Verwendung von Dispersionen von Copolymerisaten, die durch ein- oder mehrstufige radikalische Copolymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medien herstellbar sind, als Bindemittel in Beschichtungsstoffen, insbesondere Wasserbasislacken (vgl. die deutsche Patentanmeldung DE 199 30 665 A1), Füllern und Steinschlagschutzgrundierungen (vgl. die deutsche Patentanmeldung DE 199 30 067 A1) und Klarlacken (vgl. die deutsche Patentanmeldung DE 199 30 664 A1), ist bekannt. Diese Dispersionen sind völlig oder im wesentlichen frei von flüchtigen organischen Verbindungen. Sie können transparente Füllstoffe auf der Basis von Siliziumdioxid, Aluminiumoxid oder Zirkoniumoxid enthalten, wie sie in Römpp Lexikon »Lacke und Druckfarben« Georg Thieme Verlag, Stuttgart, 1998, Seiten 250 bis 252, »Füllstoffe« beschrieben werden. Wie die transparente Füllstoffe im einzelnen eingearbeitet werden sollen, wird in den deutschen Patentanmeldungen nicht beschrieben.

Die aus der deutschen Patentanmeldung DE 199 30 665 A1 bekannten Wasserbasislacke und die hieraus hergestellten Basislackierungen sowie die aus der deutschen Patentanmeldung DE 199 30 067 A1 bekannten Füllern und Steinschlagschutzgrundierungen und die hieraus hergestellten Lackierungen weisen hervorragende anwendungstechnische Eigenschaften auf. Das Applikationsverhalten der Wasserbasislacke, Füller und Steinschlagschutzgrundierungen muß jedoch noch weiter verbessert werden.

Die aus der deutschen Patentanmeldung DE 199 30 664 A1 bekannten Klarlacke und die hieraus hergestellten Klarlackierungen weisen gleichfalls hervorragende anwendungstechnische Eigenschaften auf. Indes müssen das Applikationsverhalten der Klarlacke und die Kratzfestigkeit der Klarlackierungen noch weiter verbessert werden.

Nanopartikel auf der Basis von Aluminiumoxid, Siliziumdioxid und Zirkoniumoxid sind an sich bekannt. Üblicherweise werden sie in der Form von Dispersionen in Alkoholen wie Isopropanol, Ketonen wie Methylisobutylketon oder in mit aktinischer Strahlung härtbaren Monomeren vertrieben. Verwendet man aber Dispersionen in Alkoholen oder Ketonen, werden wieder leicht flüchtige organische Verbindungen in die wäßrigen Beschichtungsstoffe, Klebstoffe und Dichtungsmassen eingetragen. Dagegen lassen sich die Dispersionen auf der Basis von Monomeren nicht in die wäßrigen Beschichtungsstoffe, Klebstoffe und Dichtungsmassen einarbeiten.

In den nicht vorveröffentlichten deutschen Patentanmeldungen DE 101 06 567.1 und DE 101 06 566.3 werden wäßrige Beschichtungsstoffe auf der Basis von wäßrigen Dispersionen von Copolymerisaten, die durch radikalische Copolymerisation von Monomeren (a) und (b) in einer Miniemulsion hergestellt werden, beschrieben. Diese Dispersionen sind zwar völlig oder im wesentlichen völlig frei von flüchtigen organischen Verbindungen. Für die Herstellung und die Stabilisierung der Miniemulsionen müssen aber vergleichsweise große Mengen an nichtflüchtigen ultrahydrophoben organischen Verbindungen verwendet werden, die letztlich das Eigenschaftprofil der Beschichtungsstoffe und der hieraus hergestellten Beschichtungen beeinflussen. Die Dispersionen können u. a. nicht näher spezifizierte Nanopartikel enthalten. Außerdem wird nicht beschrieben, wie die Nanopartikel in die Dispersionen eingearbeitet werden sollen.

Aufgabe der vorliegenden Erfindung ist es, Nanopartikel in größeren Mengen in wäßrige Dispersionen stabil einzudispergieren, ohne daß Trübungen, Stippen oder Agglomerate auftreten. Außerdem ist es die Aufgabe der vorliegenden Erfindung, neue, von flüchtigen organischen Verbindungen freie oder im wesentlichen freie, wäßrige Dispersionen bereitzustellen, die größere Mengen an Nanopartikeln enthalten, keine Trübungen, Stippen oder Agglomerate zeigen und die sich als leicht applizierbare Beschichtungsstoffe, Klebstoffe und Dichtungsmassen oder für deren Herstellung verwenden lassen. Die neuen, von flüchtigen organischen Verbindungen freien oder im wesentlichen freien Beschichtungsstoffe, Klebstoffe und Dichtungsmassen sollen kratzfeste, zähelastische, von Spannungs- oder Trocknungsrissen freie Beschichtungen, Klebstoffe und Dichtungen liefern, ohne daß dabei flüchtige organische Verbindungen (VOC) freigesetzt werden. Außerdem sollen sich die neuen, von flüchtigen organischen Verbindungen freien oder im wesentlichen freien, wäßrigen Dispersionen in einfacher Weise herstellen lassen.

Demgemäß wurde die neuen, von flüchtigen organischen Verbindungen freien oder im wesentlichen freien, wäßrigen Dispersionen gefunden, enhaltend
(A) mindestens ein Blockmischpolymerisat, herstellbar durch zwei- oder mehrstufige radikalische Copolymerisation in einem wäßrigen Medium von
   a) mindestens einem olefinisch ungesättigten Monomer, ausgewählt aus der Gruppe, bestehend aus hydrophilen und hydrophoben olefinisch ungesättigten Monomeren, und
   b) mindestens einem vom olefinisch ungesättigten Monomer (a) verschiedenen olefinisch ungesättigten Monomer der allgemeinen Formel I

      **R¹R²C=CR³R⁴** (I),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
   und
(B) hydrophile Nanopartikel.

Im folgenden werden die wäßrigen Dispersionen der Kürze halber als "erfindungsgemäße Dispersionen" bezeichnet.

Außerdem wurde ein neues Verfahren zur Herstellung von von flüchtigen organischen Verbindungen völlig oder im wesentlichen freien, wäßrigen Dispersionen gefunden, bei dem man
(1) mindestens eine von flüchtigen organischen Verbindungen freie oder im wesentlichen freie, wäßrige Dispersionen, enthaltend
   (A) mindestens ein Blockmischpolymerisat, herstellbar durch zwei-oder mehrstufige radikalische Copolymerisation in einem wäßrigen Medium von
      a) mindestens einem olefinisch ungesättigten Monomer, ausgewählt aus der Gruppe, bestehend aus hydrophilen und hydrophoben olefinisch ungesättigten Monomeren, und
      b) mindestens einem vom olefinisch ungesättigten Monomer (a) verschiedenen olefinisch ungesättigten Monomer der allgemeinen Formel I

         **R¹R²=CR³R⁴** (I),

         worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
(2) mit mindestens einer Art von hydrophilen Nanopartikeln vermischt.

Im folgenden wird das neue Verfahren zur Herstellung von wäßrigen Dispersionen der Kürze halber als "erfindungsgemäßes Verfahren" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die Aufgabe, die der vorliegenden Erfindung zugrundelag, mit Hilfe der erfindungsgemäßen Dispersionen und des erfindungsgemäßen Verfahrens gelöst werden konnte. Insbesondere war es überraschend, daß sich die Nanopartikel in einfacher Weise auch ohne die Verwendung von üblichen organischen Lösemitteln oder Monomeren in größeren Mengen, als es bisher möglich war, in die wäßrigen Dispersionen einarbeiten ließen, ohne daß es dabei zur Bildung von Trübungen, Stippen oder Agglomeraten kam. Noch mehr überraschte die breite Verwendbarkeit der erfindungsgemäßen Dispersionen als Beschichtungsstoffe, Klebstoffe oder Dichtungsmassen oder zu deren Herstellung. Die erfindungsgemäßen Beschichtungsstoffe, Klebstoffe und Dichtungsmassen ließen sich leicht applizieren. Insbesondere zeigten die erfindungsgemäßen Beschichtungsstoffe hierbei einen gleichmäßigen Verlauf und lieferten kratzfeste, zähelastische Beschichtungen, die frei von Oberflächenstörungen und Spannungs- und Trockenrissen waren. Besonders überraschte die Chemikalien- und Witterungsbeständigkeit der erfindungsgemäßen Beschichtungen, Klebeschichten und Dichtungen.

Im Rahmen der vorliegenden Erfindung bedeutet der Passus »von flüchtigen organischen Verbindungen völlig oder im wesentlichen frei«, daß die erfindungsgemäßen Dispersionen und die Nanopartikel bzw. deren wäßrige Dispersionen einen Gehalt flüchtigen organischen Verbindungen von < 2, vorzugsweise < 1, bevorzugt < 0,5 und besonders bevorzugt < 0,1 Gew.-%, jeweils bezogen auf die Dispersion aufweisen. Insbesondere liegt der Gehalt unterhalb der gaschromatographischen Nachweisgrenzen.

Zu den Begriffen »hydrophil« und »hydrophob« wird auf Römpp Lexikon Lacke und Druckfarben, Georg Thieme Verlag, Stuttgart, New York, 1998, Seite 294, »Hydrophilie«, sowie Seiten 294 und 295, »Hydrophobie«, verwiesen.

Unter aktinischer Strahlung wird elektromagnetische Strahlung, wie nahes Infrarot, sichtbares Licht, UV-Strahlung oder Röntgenstrahlung, insbesondere UV-Strahlung, oder Korpuskularstrahlung wie Elektronenstrahlung, verstanden.

Die erfindungsgemäßen Dispersionen enthalten als wesentlichen Bestandteil hydrophile Nanopartikel.

Vorzugsweise werden die Nanopartikel ausgewählt aus der Gruppe, bestehend aus Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Besonders bevorzugt werden hydrophile pyrogene Siliziumdioxide verwendet, die nicht porös sind, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet.

Der Gehalt der erfindungsgemäßen Dispersionen an Nanopartikeln (B) kann breit variieren und richtet sich nach den Erfordernissen des Einzelfalls. Vorzugsweise liegt der Gehalt, jeweils bezogen auf den Festkörper der erfindungsgemäßen Dispersion, bei 0,1 bis 20, bevorzugt 0,2 bis 15, besonders bevorzugt 0,3 bis 12, ganz besonders bevorzugt 0,4 bis 10 und insbesondere 0,5 bis 8 Gew.-%.

Der weitere wesentliche Bestandteil der erfindungsgemäßen Dispersionen ist mindestens ein Blockmischpolymerisat (A).

Das Blockmischpolymerisat (A) ist herstellbar durch zwei- oder mehrstufige, insbesondere zweistufige, radikalische Copolymerisation von mindestens einem olefinisch ungesättigten Monomer (a), ausgewählt aus der Gruppe bestehend aus hydrophilen und hydrophoben olefinisch ungesättigten Monomeren.

Geeignete hydrophile Monomere (a) enthalten mindestens eine, insbesondere eine, funktionelle Gruppe (f), die aus der Gruppe, bestehend aus
(f1) funktionellen Gruppen, die durch Neutralisationsmittel in Anionen überführt werden können, und anionischen Gruppen,
oder
(f2) funktionellen Gruppen, die durch Neutralisationsmittel und/oder Quaternisierungsmittel in Kationen überführt werden können, und kationischen Gruppen,
und
(f3) nichtionischen hydrophilen Gruppen,
ausgewählt wird.

Vorzugsweise werden die funktionellen Gruppen (f1) aus der Gruppe, bestehend aus Carbonsäure-, Sulfonsäure- und Phosphonsäuregruppen, sauren Schwefelsäure- und Phosphorsäureestergruppen sowie Carboxylat-, Sulfonat-, Phosphonat-, Sulfatester- und Phosphatestergruppen, die funktionellen Gruppen (f2) aus der Gruppe, bestehend aus primären, sekundären und tertiären Aminogruppen, primären, sekundären, tertiären und quaternären Ammoniumgruppen, quaternären Phosphoniumgruppen und tertiären Sulfoniumgruppen, und die funktionellen Gruppen (f3) aus der Gruppe, bestehend aus omega-Hydroxy- und omega-Alkoxy-poly(alkylenoxid)-1-yl-Gruppen, ausgewählt.

Beispiele gut geeigneter hydrophiler Monomere (a) mit funktionellen Gruppen (f1) sind Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremo-no(meth)acryloyloxyethylester, Bernsteinsäuremono(meth)acryloyloxyethylester oder Phthalsäuremono(meth)acryloyloxyethylester, insbesondere Acrylsäure und Methacrylsäure.

Beispiele gut geeigneter hydrophiler Monomere (a) mit funktionellen Gruppen (f2) sind 2-Aminoethylacrylat und -methacrylat oder Allylamin.

Beispiele gut geeigneter hydrophiler Monomere (a) mit funktionellen Gruppen (f3) sind omega-Hydroxy- oder omega-Methoxy-polyethylenoxid-1-yl-, omega-Methoxy-polypropylenoxid-1-yl-, oder omega-Methoxy-poly(ethylenoxid-co-polypropylenoxid)-1-yl-acrylat oder -methacrylat.

Bei der Auswahl der hydrophilen Monomere (a) ist darauf zu achten, daß die hydrophilen Monomere (a) mit funktionellen Gruppen (f1) und die hydrophilen Monomere (a) mit funktionellen Gruppen (f2) nicht miteinander kombiniert werden, weil dies zur Bildung unlöslicher Salze und Polyelektrolytkomplexe führen kann. Dagegen können die hydrophilen Monomere (a) mit funktionellen Gruppen (f1) oder mit funktionellen Gruppen (f2) mit den hydrophilen Monomeren (a) mit funktionellen Gruppen (f3) beliebig kombiniert werden. Von den vorstehend beschriebenen hydrophilen Monomeren (a) werden die Monomeren (a) mit den funktionellen Gruppen (f1) besonders bevorzugt verwendet.

Vorzugsweise werden dabei die Neutralisationsmittel für die in Anionen umwandelbaren funktionellen Gruppen (f1) aus der Gruppe, bestehend aus Ammoniak, Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin, Triethanolamin, Diethylentriamin und Triethylentetramin, und die Neutralisationsmittel für die in Kationen umwandelbaren funktionellen Gruppen (f2) ausgewählt aus der Gruppe, bestehend aus Schwefelsäure, Salzsäure, Phosphorsäure, Ameisensäure, Essigsäure, Milchsäure, Dimethylolpropionsäure und Zitronensäure, ausgewählt.

Beispiele geeigneter hydrophober olefinisch ungesättigter Monomere (a) sind
(1) im wesentlichen säuregruppenfreien Ester olefinisch ungesättigter Säuren, wie (Meth)Acrylsäure-, Crotonsäure-, Ethacrylsäure-, Vinylphosphonsäure- oder Vinylsulfonsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat, -ethacrylat oder - vinylphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobornyl-, Dicyclopentadienyl-, Octahydro-4,7-methano-1H-inden-methanol- oder tert.-Butylcyclohexyl(meth)acrylat, -crotonat, -ethacrylat, - vinylphosphonat oder vinylsulfonat. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropantri(meth)acrylat; oder Pentaerythrittetra(meth)acrylat sowie die analogen Ethacrylate oder Crotonate enthalten. Im Rahmen der vorliegenden Erfindung sind hierbei unter untergeordneten Mengen an höherfunktionellen Monomeren (1) solche Mengen zu verstehen, welche nicht zur Vernetzung oder Gelierung der Blockmischpolymerisate (A) führen, es sei denn, sie sollen in der Form von vernetzten Mikrogelteilchen vorliegen;
(2) Monomere, die mindestens eine Hydroxylgruppe oder Hydroxymethylaminogruppe pro Molekül tragen und im wesentlichen säuregruppenfrei sind, wie
   - Hydroxyalkylester von alpha,beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat oder - ethacrylat; 1,4-Bis(hydroxymethyl)cyclohexan-, Octahydro-4,7-methano-1H-inden-dimethanol- oder Methylpropandiolmonoacrylat, -monomethacrylat, - monoethacrylat oder -monocrotonat; oder Umsetzungsprodukte aus cyclischen Estern, wie z.B. epsilon-Caprolacton und diesen Hydroxyalkylestern;
   - olefinisch ungesättigte Alkohole wie Allylalkohol;
   - Allylether von Polyolen wie Trimethylolpropanmonoallylether oder Pentaerythritmono-, -di- oder -triallylether. Die höherfunktionellen Monomeren (1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Blockmischpolymerisate (A) führen, es sei denn, sie sollen in der Form von vernetzten Mikrogelteilchen vorliegen;
   - Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (al) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;
   - Formaldehydaddukte von Aminoalkylestern von alpha,beta-olefinisch ungesättigten Carbonsäuren und von alpha,beta-ungesättigten Carbonsäureamiden, wie N-Methylol- und N,N-Dimethylol-aminoethylacrylat, -aminoethylmethacrylat, -acrylamid und -methacrylamid; sowie
   - Acryloxysilangruppen und Hydroxylgruppen enthaltende olefinisch ungesättigte Monomere, herstellbar durch Umsetzung hydroxyfunktioneller Silane mit Epichlorhydrin und anschließender Umsetzung des Zwischenprodukts mit einer alpha,beta-olefinisch ungesättigten Carbonsäure, insbesondere Acrylsäure und Methacrylsäure, oder ihren Hydroxyalkylestern;
(3) Vinylester von in alpha-Stellung verzweigten Monocarbonsäuren mit 5 bis 18 Kohlenstoffatomen im Molekül, wie die Vinylester der Versatic ®-Säure, die unter der Marke VeoVa ® vertrieben werden;
(4) cyclische und/oder acyclische Olefine, wie Ethylen, Propylen, But-1-en, Pent-1-en, Hex-1-en, Cyclohexen, Cyclopenten, Norbonen, Butadien, Isopren, Cylopentadien und/oder Dicyclopentadien;
(5) Amide von alpha,beta-olefinisch ungesättigten Carbonsäuren, wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl- und/oder N,N-Cyclohexyl-methyl-(meth)acrylsäureamid;
(6) Epoxidgruppen enthaltenden Monomere, wie der Glycidylester der Acrylsäure, Methacrylsäure, Ethacrylsäure, Crotonsäure, Maleinsäure, Fumarsäure und/oder Itaconsäure;
(7) vinylaromatischen Kohlenwasserstoffe, wie Styrol, Vinyltoluol oder alpha-Alkylstyrole, insbesondere alpha-Methylstyrol;
(8) Nitrile, wie Acrylnitril oder Methacrylnitril;
(9) Vinylverbindungen, ausgewählt aus der Gruppe, bestehend aus Vinylhalogeniden wie Vinylchlorid, Vinylfluorid, Vinylidendichlorid, Vinylidendifluorid; Vinylamiden, wie N-Vinylpyrrolidon; Vinylethern wie Ethylvinylether, n-Propylvinylether, Isopropylvinylether, n-Butylvinylether, Isobutylvinylether und Vinylcyclohexylether; sowie Vinylestern wie Vinylacetat, Vinylpropionat, und Vinylbutyrat;
(10) Allylverbindungen, ausgewählt aus der Gruppe, bestehend aus Allylethern und -estern, wie Propylallylether, Butylallylether, Ethylenglykoldiallylether Trimethylolpropantriallylether oder Allylacetat oder Allylpropionat; was die höherfunktionellen Monomere betrifft, gilt das vorstehend Gesagte sinngemäß;
(11) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen, wie Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind; und
(12) Carbamat- oder Allophanatgruppen enthaltende Monomere, wie Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3,479,328 A 1, US 3,674,838 A 1, US 4,126,747 A 1, US 4,279,833 A 1 oder US 4,340,497 A 1 beschrieben.

Als Monomere (b) werden Verbindungen der allgemeinen Formel I verwendet.

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, - Propyl- oder -Butylcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl-oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Blockmischpolymerisate (A) ist Diphenylethylen von ganz besonderem Vorteil und wird deshalb erfindungsgemäß ganz besonders bevorzugt verwendet.

Jedes der vorstehend genannten Monomeren (a) kann für sich alleine mit dem Monomeren (b) polymerisiert werden. Erfindungsgemäß ist es indes von Vorteil, mindestens zwei Monomere (a) zu verwenden, weil hierdurch das Eigenschaftsprofil der resultierenden Copolymerisate (A) in besonders vorteilhafter Weise sehr breit variiert und dem jeweiligen Verwendungszweck der erfindungsgemäßen Dispersionen ganz gezielt angepaßt werden kann. Vorzugsweise werden die Monomeren (a) so ausgewählt, daß das Eigenschaftsprofil der Blockmischpolymerisate (A) im wesentlichen von den vorstehend beschriebenen (Meth)Acrylatmonomeren bestimmt wird, wobei die Monomeren (a), die anderen Monomerklassen entstammen, dieses Eigenschaftsprofil in vorteilhafter Weise breit und gezielt variieren. Insbesondere werden in dieser Weise in die Blockmischpolymerisate (A) funktionelle Gruppen eingebaut, durch die die Blockmischpolymerisate (A) hydrophil werden, so daß sie in wäßrigen Medien dispergiert oder gelöst werden können. Außerdem können reaktive funktionelle Gruppen eingebaut werden, die mit den nachstehend beschriebenen komplementären reaktiven funktionellen Gruppen der gegebenenfalls verwendeten Vernetzungsmittel thermische Vernetzungsreaktionen eingehen können. Außerdem können funktionelle Gruppen angebaut werden, die den Blockmischpolymerisaten (A) selbstvernetzende Eigenschaften verleihen wie N-Methylol- oder N-Alkoxymethylgruppen.

Das Blockmischpolymerisat (A) kann somit mindestens eine, vorzugsweise mindestens zwei, reaktive funktionelle Gruppen enthalten, welche mit komplementären reaktiven funktionellen Gruppen der nachstehend beschriebenen, gegebenenfalls verwendeten Vernetzungsmittel thermische Vernetzungsreaktionen eingehen können. Die reaktiven funktionellen Gruppen können dabei über die Monomeren (a) in die Blockmischpolymerisate (A) eingebracht oder nach dessen Synthese durch polymeranaloge Reaktionen eingeführt werden.

Beispiele geeigneter erfindungsgemäß zu verwendender komplementärer reaktiver funktioneller Gruppen, welche Vernetzungsreaktionen eingehen, sind in der folgenden Übersicht zusammengestellt. In der Übersicht steht die Variable R⁵ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste; die Variablen R⁶ und R⁷ stehen für gleiche oder verschiedene Alkyl-, Cycloalkyl-, Alkylcycloalkyl- oder Cycloalkylalkylreste oder sind miteinander zu einem aliphatischen oder heteroaliphatischen Ring verknüpft. Beispiele geeigneter Reste dieser Art sind die vorstehend bei den Resten R¹, R², R³ und R⁴ aufgeführten.

### Übersicht: Beispiele komplementärer funktioneller Gruppen im Blockmischpolymerisat (A) und Vernetzungsmittel oder Vernetzungsmittel und Blockmischpolymerisat (A)

| | |
|---|---|
| -SH | -C(O)-OH |
| -NH₂ | -C(O)-O-C(O)- |
| -OH | -NCO |
| -O-(CO)-NH-(CO)-NH₂ | -NH-C(O)-OR⁵ |
| -O-(CO)-NH₂ | -CH₂-OH |
| | -CH₂-O-CH₃ |
| | -NH-C(O)-CH(-C(O)OR⁵)₂ |
| | -NH-C(O)-CH(-C(O)OR⁵)(-C(O)-R⁵) |
| | -NH-C(O)-NR⁶R⁷ |
| | >Si(OR⁵)₂ |
| | 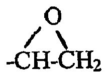 |
| -C(O)-OH | 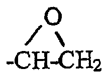 |
| -O-C(O)-CR⁵=CH₂ | -OH |
| -O-CR=CH₂ | -NH₂ |
| | -C(O)-CH₂-C(O)-R⁵ |
| | -CH=CH₂ |

Die Auswahl der jeweiligen komplementären reaktiven funktionellen Gruppen richtet sich zum einen danach, daß sie bei der Lagerung der erfindungsgemäßen Dispersionen keine unerwünschten Reaktionen eingehen und/oder die gegebenenfalls erfolgende Härtung der erfindungsgemäßen Dispersionen bzw. der hieraus hergestellten Beschichtungsstoffe, Klebstoffe und Dichtungsmassen mit aktinischer Strahlung nicht stören oder inhibieren dürfen, und zum anderen danach, in welchem Temperaturbereich die thermische Härtung erfolgen soll.

Hierbei ist es, insbesondere im Hinblick auf thermisch sensible Substrate wie Kunststoffe, erfindungsgemäß von Vorteil, einen Temperaturbereich zu wählen, welcher 100°C, insbesondere 80°C nicht überschreitet. Im Hinblick auf diese Rahmenbedingungen haben sich Hydroxylgruppen und Isocyanatgruppen oder Carboxylgruppen und Epoxygruppen als komplementäre reaktive funktionelle Gruppen als vorteilhaft erwiesen, weswegen sie in den erfindungsgemäßen Dispersionen oder Beschichtungsstoffen, Klebstoffen und Dichtungsmassen, welche als Zwei- oder Mehrkomponentensysteme vorliegen, erfindungsgemäß bevorzugt angewandt werden.

Können höhere Vernetzungstemperaturen, beispielsweise von 100 bis 180°C, angewandt werden, kommen auch Einkomponentensysteme in Betracht, worin die reaktiven funktionellen Gruppen vorzugsweise Thio-, Amino-, Hydroxyl-, Carbamat-, Allophanat-, Carboxy-, und/oder (Meth)acrylatgruppen, insbesondere aber Hydroxylgruppen, und die komplementären reaktiven funktionellen Gruppen vorzugsweise Anhydrid-, Carboxy-, Epoxy-, blockierte Isocyanat-, Urethan-, Methylol-, Methylolether-, Siloxan-, Amino-, Hydroxy- und/oder beta-Hydroxyalkylamidgruppen sind.

Das Blockmischpolymerisat (A) bzw. die hiermit hergestellte erfindungsgemäße Dispersion kann aber auch ohne ein Vernetzungsmittel verfilmen und vorzügliche Beschichtungen, Klebschichten und Dichtungen bilden. In diesem Falle ist das Blockmischpolymerisat (A) bzw. die Dispersion physikalisch härtend. Im Rahmen der vorliegenden Erfindung werden die physikalische Härtung und die Härtung über die vorstehend beschriebenen komplementären reaktiven funktionellen Gruppen unter dem Oberbegriff "thermische Härtung" zusammenfaßt.

Vorzugsweise werden die Blockmischpolymerisate (A) hergestellt, indem man in einer ersten Stufe (i) mindestens ein Monomer (b) mit mindestens einem hydrophil Monomer (a) zu einem Copolymerisat oder einem Makroinitiator umsetzt. Dieses Copolymerisat oder dieser Makroinitiator wird dann nach seiner Isolierung oder unmittelbar in der Reaktionsmischung, vorzugsweise unmittelbar in der Reaktionsmischung, in mindestens einer weiteren Stufe (ii) mit mindestens einem weiteren, vorzugsweise hydrophoben, Monomer (a) unter radikalischen Bedingungen umgesetzt. Bevorzugt wird Umsetzung in Abwesenheit eines Initiators der radikalischen Polymerisation durchgeführt.

Dabei können aber die Stufen (i) und (ii) auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und der gewünschten Eigenschaften umgesetzt, wonach mindestens ein weiteres Monomer (a) hinzugegeben und radikalisch polymerisiert wird. In einer weiteren Ausführungsform werden von Anfang an mindestens zwei Monomere (a) eingesetzt, wobei das Monomer (b) zunächst mit einem der mindestens zwei Monomeren (a) reagiert und anschließend das resultierende Copolymerisat oberhalb eines bestimmten Molekulargewichts auch mit dem weiteren Monomeren (a) reagiert.

Vorzugsweise liegt das Gewichtsverhältnis des in der ersten Stufe (i) gebildeten Copolymerisats oder Makroinitators zu dem oder den weiteren Monomer(en) (a) der weiteren Stufe(n) (ii) bei 1 : 25 bis 5 : 1, bevorzugt 1 : 22 bis 4 : 1, besonders bevorzugt 1 : 18 bis 3 : 1, ganz besonders bevorzugt 1 : 16 bis 2 : 1 und insbesondere 1 : 15 bis 1 : 1.

Je nach Reaktionsführung ist es dabei möglich, Blockmischpolymerisate (A) mit Block-, Multiblock-, Gradienten(co)polymer-, Stern- und Verzweigungsstrukturen, die ggf. auch an den Endgruppen funktionalisiert sind, herzustellen.

Als Beispiele für einsetzbare Initiatoren der radikalischen Polymerisation werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl-hexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid. Weitere Beispiele geeigneter Initiatoren werden in der deutschen Patentanmeldung DE 196 28 142 A1, Seite 3, Zeile 49, bis Seite 4, Zeile 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und (b) sowie des Initiators, besonders bevorzugt 0,5 bis 50 Gew.-%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Die zwei- oder mehrstufige radikalische Copolymerisation bzw. Blockmischpolymerisation wird in einem wäßrigen Medium durchgeführt.

Das wäßrige Medium enthält im wesentlichen Wasser. Hierbei kann das wäßrige Medium in untergeordneten Mengen die nachstehend im Detail beschriebenen Zusatzstoffe und/oder sonstige gelöste feste, flüssige oder gasförmige, nieder-und/oder hochmolekulare Stoffe, insbesondere Basen, enthalten, sofern diese nicht die Copolymerisation in negativer Weise beeinflussen oder gar hemmen und/oder zur Emission flüchtiger organischer Verbindungen führen. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Beispiele geeigneter Basen sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Di- und/oder Triethanolamin.

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 198 28 742 A 1 oder EP 0 498 583 A 1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt (vgl. die deutsche Patentanmeldung DE 198 28 742 A 1).

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150 °C, ganz besonders bevorzugt 50 bis 120 °C und insbesondere 55 bis 110 °C gewählt wird.

Bei Verwendung besonders leicht flüchtiger Monomere (a) und/oder (b) kann die Copolymerisation auch unter Druck, vorzugsweise unter 1,5 bis 3.000 bar, bevorzugt 5 bis 1.500 und insbesondere 10 bis 1.000 bar mit durchgeführt werden.

Hinsichtlich der Molekulargewichtsverteilungen ist das Blockmischpolymerisat (A) keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 4, vorzugsweise sonders bevorzugt ≤ 2 und insbesondere ≤ 1,5 sowie in einzelnen Fällen auch ≤ 1,3 resultiert. Die Molekulargewichte der Blockmischpolymerisate (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Der Anteil der erfindungsgemäß zu verwendenden Blockmischpolymerisate (A) an den erfindungsgemäßen Dispersionen kann sehr breit variieren. Vorteilhafterweise liegt der Anteil bei 85 bis 99,9, bevorzugt 88 bis 99,8, besonders bevorzugt 90 bis 99,7 und insbesondere 92 bis 99,6 insbesondere 93 bis 99,5 Gew.-%, jeweils bezogen auf den Festkörper der erfindungsgemäßen Dispersion.

Die erfindungsgemäße Dispersion kann außer den Blockmischpolymerisaten (A) und den Nanopartikeln (B) noch übliche und bekannte Zusatzstoffe enthalten. Dabei werden nur solche Zusatzstoffe verwendet, die keine flüchtigen organischen Verbindungen sind oder diese enthalten. Außerdem richtet sich die Auswahl der Zusatzstoffe danach, ob die erfindungsgemäßen Dispersionen und Beschichtungsstoffe, Klebstoffe und Dichtungsmassen pigmentiert sein sollen oder nicht. Der Fachmann kann daher die für den jeweiligen Einzelfall optimalen Zusatzstoffe anhand seines allgemeinen Fachwissen ggf. unter Zuhilfenahme orientierender Vorversuche auswählen.

Beispiele geeigneter Zusatzstoffe für pigmentierte erfindungsgmäße Dispersionen, Beschichtungsstoffe, Klebstoffe und Dichtungsmassen sind farb- und/oder effektgebende, fluoreszierende, elektrisch leitfähige und/oder magnetisch abschirmende Pigmente, Metallpulver, lösliche organische Farbstoffe und/oder organische und anorganische, transparente oder opake Füllstoffe.

Beispiele geeigneter Zusatzstoffe für pigmentierte und nicht pigmentierte erfindungsgmäße Dispersionen, Beschichtungsstoffe, Klebstoffe und Dichtungsmassen sind Vernetzungsmittel, sonstige, von den Blockmischpolymerisaten (A) verschiedene, thermisch oder myl in it aktinischer Strahlung härtbare Bindemittel, Absorber, Lichtschutzmittel, wie UV-Absorber oder Radikalfänger, Entlüftungsmittel, Slipadditive, Polymerisationsinhibitoren, Katalysatoren für die Vernetzung, thermolabile radikalische Initiatoren, Photoinitiatoren, Antioxidantien, Entschäumer, Emulgatoren, Netz- und Dipergiermittel, Haftvermittler, Verlaufmittel, filmbildende Hilfsmittel, Sag control agents (SCA), rheologiesteuernde Additive (Verdicker), Haftvermittler, Verlaufmittel, filmbildende Hilfsmittel, Flammschutzmittel, Korrosionsinhibitoren, Rieselhilfen, Wachse und/oder Mattierungsmittel.

Die Zusatzstoffe können einzeln oder als Gemische angewandt werden.

Beispiele geeigneter Effektpigmente sind Metallplättchenpigmente wie handelsübliche Aluminiumbronzen, gemäß DE 36 36 183 A 1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A 1, DE 37 18 446 A 1, DE 37 19 804 A 1, DE 39 30 601 A 1, EP 0 068 311 A 1, EP 0 264 843 A 1, EP 0 265 820 A 1, EP 0 283 852 A 1, EP 0 293 746 A 1, EP 0 417 567 A 1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »AzomethinPigmente«, »Azopigmente«, und Seite 379, »Metallkomplex-Pigmente«, verwiesen.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen Aluminium, Zink, Kupfer, Bronze oder Messing.

Geeignete lösliche organische Farbstoffe sind lichtechte organische Farbstoffe mit einer geringen oder nicht vorhandenen Neigung zur Migration aus dem erfindungsgemäßen Pulverlack und den hieraus hergestellten Beschichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Beispiele geeigneter organischer und anorganischer Füllstoffe sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Vorzugsweise werden Glimmer und Talkum angewandt, wenn die Kratzfestigkeit der aus den erfindungsgemäßen Pulverlacken hergestellten Beschichtungen verbessert werden soll.

Außerdem ist es von Vorteil, Gemische von plättchenförmigen anorganischen Füllstoffen wie Talk oder Glimmer und nichtplättchenförmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter Vernetzungsmittel für Zwei- oder Mehrkomponentensysteme sind Polyisocyanate.

Die Polyisocyanate enthalten im statistischen Mitteln mindestens 2,0, bevorzugt mehr als 2,0 und insbesondere mehr als 3,0 Isocyanatgruppen pro Molekül. Die Anzahl der Isocyanatgruppen ist nach oben im Grunde nicht begrenzt; erfindungsgemäß ist es indes von Vorteil, wenn die Anzahl 15, vorzugsweise 12, besonders bevorzugt 10, ganz besonders bevorzugt 8,0 und insbesondere 6,0 nicht überschreitet.

Beispiele geeigneter Polyisocyanate sind isocyanatgruppenhaltige Polyurethanpräpolymere, die durch Reaktion von Polyolen mit einem Überschuß an Diisocyanaten hergestellt werden können und bevorzugt niederviskos sind.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Düsocyanatocyclohexan, 1,3-Diisocyanatocyclohexan, 1,4-Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat (HDI), Ethylethylendiisocyanat, Trimethylhexan-diisocyanat, Heptamethylendüsocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4-oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan oder flüssiges Bis(4-isocyanatocyclohexyl)methan eines trans/trans-Gehalts von bis zu 30 Gew.-%, vorzugsweise 25 Gew.-% und insbesondere 20 Gew.-%, wie es den Patentanmeldungen DE 44 14 032 A1, GB 1220717 A 1, DE 16 18 795 A 1 oder DE 17 93 785 A 1 beschrieben wird, bevorzugt Isophorondiisocyanat, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan oder HDI, insbesondere HDI.

Es können auch Isocyanurat-, Biuret-, Allophanat-, Iminooxadiazindion-, Urethan-, Harnstoff , Carbodiimid- und/oder Uretdiongruppen aufweisende Polyisocyanate verwendet werden, die in üblicher und bekannter Weise aus den vorstehend beschriebenen Diisocyanaten hergestellt werden. Beispiel geeigneter Herstellungsverfahren und Polyisocyanate sind beispielsweise aus dem Patentschriften CA 2,163,591 A, US-A-4,419,513, US 4,454,317 A, EP 0 646 608 A, US 4,801,675 A, EP 0 183 976 A1, DE 40 15 155 A 1, EP 0 303 150 A 1, EP 0 496 208 A 1, EP 0 524 500 A 1, EP 0 566 037 A 1, US 5,258,482 A 1, US 5,290,902 A 1, EP 0 649 806 A 1, DE 42 29 183 A 1oder EP 0 531 820 A 1 bekannt.

Weitere Beispiele geeigneter Vernetzungsmittel sind blockierte Polyisocyanate.

Beispiele für geeignete Blockierungsmittel zur Herstellung der blockierten Polyisocyanate sind die aus der US-Patentschrift US 4,444,954 A oder US 5,972,189 A bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Diethylenglykolmonopropylether, Diethylenglykolmonobutylether Propylenglykolmonomethylether, Methoxymethanol, 2-(-Hydroxyethoxy)phenol, 2-(Hydroxypropoxy)phenol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie
xvii) Gemische dieser Blockierungsmittel, insbesondere Dimethylpyrazol und Triazole, Malonester und Acetessigsäureester, Dimethylpyrazol und Succinimid oder Butyldiglykol und Trimethylolpropan.

Weitere Beispiele für geeignete Vernetzungsmittel sind alle bekannten aliphatischen und/oder cycloaliphatischen und/oder aromatischen, niedermolekularen, oligomeren und polymeren Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether), oder der Glycidylester der Trimellithsäure oder Trigylcidylispcyanurat (TGIC).

Als Vernetzungsmittel können auch Tris(alkoxycarbonylamino)triazine (TACT) der allgemeinen Formel 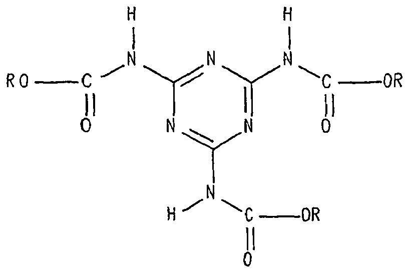 eingesetzt werden.

Beispiele geeigneter Tris(alkoxycarbonylamino)triazine (B) werden in den Patentschriften US 4,939,213 A, US 5,084,541 A oder EP 0 624 577 A 1 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Des weiteren sind Aminoplastharze, beispielsweise Melaminharz, als Vernetzungsmittel verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4,710,542 A und EP 0 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Die Aminoplastharze können auch als Bindemittel (C) angewandt werden.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxypropyl)-adipamid.

Des weiteren können Carbonsäuren, insbesondere gesättigte, geradkettige, aliphatische Dicarbonsäuren mit 3 bis 20 Kohlenstoffatomen im Molekül, insbesondere Dodecandisäure, verwendet werden.

Weitere Beispiele geeigneter Vernetzungsmittel sind Siloxane, insbesondere Siloxane mit mindestens einer Trialkoxy- oder Dialkoxysilangruppe.

Welche Vernetzungsmittel im einzelnen angewandt werden, richtet sich nach den komplementären reaktiven funktionellen Gruppen, die in den Blockmischpolymerisaten (A) enthalten sind.

Beispiele geeigneter mit aktinischer Strahlung härtbarer sonstiger Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate. Bevorzugt werden Bindemittel eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt. Weitere Beispiele geeigneter mit aktinischer Strahlung härtbarer Additive sind aus dem deutschen Patent DE 197 09 467 C 1 bekannt.

Beispiele geeigneter thermisch härtbarer sonstiger Bindemittel sind lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, die die vorstehend beschriebenen reaktiven funktionellen Gruppen enthalten.

Beispiele geeigneter thermisch härtbarer Reaktiverdünner sind stellungsisomere Diethyloctandiole oder Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden.

Beispiele geeigneter mit aktinischer Strahlung härtbarer Reaktivverdünner sind die in Römpp Lexikon Lacke und Druckfarben, Georg Thieme Verlag, Stuttgart, New York, 1998, auf Seite 491 unter dem Stichwort »Reaktivverdünner« beschriebenen.

Beispiele geeigneter thermolabiler radikalischer Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether.

Beispiele geeigneter Katalysatoren für die Vernetzung sind Wismutlactat, -citrat, - ethylhexanoat oder -dimethylolpropionat Dibutylzinndilaurat, Lithiumdecanoat oder Zinkoctoat, mit Aminen blockierte organische Sulfonsäuren, quarternäre Ammoniumverbindungen, Amine, Imidazol und Imidazolderivate wie 2-Styrylimidazol, 1-Benzyl-2-methylimidazol, 2-Methylimidazol und 2-Butylimidazol, wie in dem belgischen Patent Nr. 756,693 beschrieben werden, oder Phosphonium-Katalysatoren wie Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoninmiodid, Tetrabutylphosphoniumbromid und Tetrabutylphosphonium-Acetat-Essigsäurekomplex, wie sie beispielsweise in den US-Patentschriften US 3,477,990 A oder US 3,341,580 A beschrieben werden.

Beispiele geeigneter Photoinitiatoren werden in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben.

Beispiele geeigneter Antioxidantien sind Hydrazine und Phosphorverbindungen.

Beispiele geeigneter Lichtschutzmittel sind HALS-Verbindungen, Benztriazole oder Oxalanilide.

Beispiele geeigneter Radikalfänger und Polymerisationsinhibitoren sind organische Phosphite oder 2,6-Di-tert-Butylphenol-Derivate.

Beispiele geeigneter Entlüftungsmittel sind Diazadicycloundecan oder Benzoin.

Ein Beispiel für einen geeigneten Haftvermittler ist Tricyclodecandimethanol;

Beispiele für geeignete filmbildende Hilfsmittel sind Cellulose-Derivate.

Beispiel geeigneter rheologiesteuemder Additive (C) sind die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate.

Weitere Beispiele für die vorstehend aufgeführten sowie für weitere Zusatzstoffe finden sich in dem Lehrbuch »Lackadditive« von Johan Bieleman, Wiley-VCH, Weinheim, New York, 1998.

Die Herstellung der erfindungsgemäßen Dipersionen aus den vorstehend beschriebenen Blockmischpolymerisaten (A) und den Nanopartikeln (B) sowie gegebenenfalls aus mindestens einem der vorstehend beschriebenen Zusatzstoffe kann in beliebiger geeigneter Weise erfolgen. Vorzugsweise werden die erfindungsgemäßen Dispersionen mit Hilfe des erfindungsgemäßen Verfahrens hergestellt.

Das erfindungsgemäße Verfahren geht aus von der Herstellung der Dispersion des Blockmischpolymerisats (A), wie vorstehend beschrieben. In diese Dispersion wird dann mindestens eine, insbesondere eine, Art der vorstehend beschriebenen hydrophilen Nanopartikel (B) eindispergiert.

Vorzugsweise wird für die Eindispergierung eine von flüchtigen organischen Verbindungen freie oder im wesentlichen freie, wäßrige Dispersion mindestens einer Art, insbesondere einer Art, von hydrophilen Nanopartikeln (B) hergestellt.. Zu diesem Zweck werden die Nanopartikel (B) in einem wäßrigen Medium durch Naßvermahlung dispergiert. Für die Mahlung werden übliche und bekannte Vorrichtungen wie Rührwerksmühlen oder Labormühlen verwendet, wobei übliche und bekannte Mahlkörper wie Glasperlen eingesetzt werden. Anschließend werden die beiden wäßrigen Dispersionen (A) und (B) in dem gewünschten Mengenverhältnis miteinander vermischt, wobei übliche und bekannte Vorrichtungen, wie Rührkessel, Dissolver, Inline-Dissolver, Rührwerksmühlen, Labormühlen oder Ultraturrax, angewandt werden. Vorzugsweise wird die resultierende erfindungsgemäße Dispersion vor ihrer zweckgemäßen Verwendung filtriert.

Die erfindungsgemäßen Dispersionen eignen sich hervorragend als Beschichtungsstoffe, Klebstoffe und Dichtungsmassen oder für deren Herstellung. Die erfindungsgemäßen Beschichtungsstoffe, Klebstoffe und Dichtungsmassen liefert ohne Emission flüchtiger organischer Verbindungen Beschichtungen, Klebstoffe und Dichtungen mit vorzüglichen anwendungstechnischen Eigenschaften.

Besondere Vorteile zeigen die erfindungsgemäßen Dispersionen als Beschichtungsstoffe oder zu deren Herstellung. Die erfindungsgemäßen Beschichtungsstoffe können als Füller, Steinschlagschutzgrundierungen, Wasserbasislacke, Unidecklacke oder Klarlacke eingesetzt werden. Diese erfindungsgemäßen Beschichtungsstoffe liefern ohne Emission flüchtiger organischer Verbindungen hervorragende Füllerlackierungen, Basislackierungen oder Klarlackierungen sowie farb- und/oder effektgebende Mehrschichtlackierungen mit vorzüglichen anwendungstechnischen Eigenschaften. Ganz besondere Vorteile zeigen die erfindungsgemäßen Beschichtungsstoffe in ihre Verwendung als Klarlacke.

Methodisch weist die Applikation der erfindungsgemäßen Beschichtungsstoffe, Klebstoffe und Dichtungsmassen keine Besonderheiten auf, sondern kann durch alle üblichen Applikationsmethoden, wie z.B. Spritzen, Rakeln, Streichen, Gießen, Tauchen, Träufeln oder Walzen erfolgen.

Geeignet sind alle Substrate, die durch eine Härtung der hierauf oder hierin befindlichen Schichten unter Anwendung von Hitze sowie gegebenenfalls von aktinischer Strahlung nicht geschädigt werden, wie Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde all dieser Materialien.

Demnach kommen die erfindungsgemäßen Beschichtungsstoffe, Klebstoffe und Dichtungsmassen für das Lackieren, Verkleben und Abdichten von Kraftfahrzeugkarosserien und Teile hiervon, Bauwerken im Innen- und Außenbereich, Türen, Fenstern und Möbeln sowie für das Lackieren, Verkleben und Abdichten im Rahmen der industriellen Lackierung, inklusive Coils, Container, elektrotechnische Bauteile, wie Motorwicklungen oder Transformatorwicklungen, und weiße Ware, inklusive Haushaltsgeräte, Heizkessel und Radiatoren, verwendet werden.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Beschichtungsstoffe, Klebstoffe und Dichtungsmassen weist keine methodischen Besonderheiten auf, sondern erfolgt nach den üblichen und bekannten thermischen Methoden wie Erhitzen in einem Umluftofen oder Bestrahlen mit IR-Lampen, die noch durch die Bestrahlung mit aktinischer Strahlung ergänzt werden kann (Dual Cure). Hierbei können Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen angewandt werden.

Die resultierenden erfindungsgemäßen Beschichtungen, insbesondere die erfindungsgemäßen ein- oder mehrschichtigen farb- und/oder effektgebenden Lackierungen und Klarlackierungen, sind einfach herzustellen und weisen auch unter extremen klimatischen Bedingungen hervorragende optische Eigenschaften und eine sehr hohe Chemikalien- und Witterungsbeständigkeit sowie Kratzfestigkeit auf. Sie sind daher im Innen- und Außenbereich verwendbar.

Die aus den erfindungsgemäßen Klebstoffen und Dichtungsmassen hergestellten erfindungsgemäßen Klebschichten und Dichtungen haben auch unter extremen klimatischen Bedingungen eine hervorragende Klebkraft und Dichtungsfähigkeit auch über lange Zeiträume hinweg. Auch sie sind im Innen- und Außenbereich verwendbar.

Daher zeichnen sich auch die erfindungsgemäßen grundierten und ungrundierten Substrate, insbesondere Karosserien von Automobilen und Nutzfahrzeugen, industrielle Bauteile, inklusive Kunststoffteile, Emballagen, Coils, weiße Ware und elektrotechnische Bauteile, oder Möbel, die mit mindestens einer erfindungsgemäßen Beschichtung beschichtet, mit mindestens einer erfindungsgemäßen Dichtung abgedichtet und/oder mit mindestens einem erfindungsgemäßen Klebstoff verklebt sind, durch besondere technische und wirtschaftliche Vorteile, insbesondere eine lange Gebrauchsdauer, aus, was sie für die Anwender besonders attraktiv macht.

### Beispiele

### Herstellbeispiel 1

### Die Herstellung eines Copolymerisats (Makroinitiator)

In einem Stahlreaktor, wie er üblicherweise für die Herstellung von Dispersionen verwendet wird, ausgestattet mit einem Rührer, einem Rückflußkühler und 3 Zulaufgefäßen wurden 1591,1 Gewichtsteile deionisiertes Wasser vorgelegt und auf 70 °C erhitzt. In dem ersten Zulaufgefäß wurden 308,2 Gewichtsteile Acrylsäure, 555,2 Gewichtsteile Methylmethacrylat und 45,2 Gewichtsteile Diphenylethylen vorgelegt. In dem zweiten Zulaufgefäß wurden 300,1 Gewichtsteile 25 prozentige Ammoniaklösung vorgelegt. In dem dritten Zulaufgefäßen wurden 159 Gewichtsteile deionisiertes Wasser und 68,2 Gewichtsteile Ammoniumperoxodisulfat vorgelegt. Unter intensivem Rühren der Vorlage im Stahlreaktor wurden die drei Zuläufe gleichzeitig gestartet. Der erste und zweite Zulauf wurden innerhalb von vier Stunden zudosiert. Der dritte Zulauf wurde innerhalb von 4,5 Stunden zudosiert. Das resultierende Reaktionsgemisch - wurde während vier Stunden bei 70 °C gehalten und anschließend auf unter 40 °C abgekühlt und durch einen 100µm-GAF-Beutel abfiltriert. Die resultierende Dispersion wies einen Festkörpergehalt von 33 Gew.-% (1 Stunde, 130 °C) und einen Gehalt an freien Monomeren von weniger als 0,2 Gew.-% (bestimmt durch Gaschromatographie) auf.

Die Dispersion wurde für die Herstellung eines Blockmischpolymerisats (A) verwendet.

### Herstellbeispiel 2

### Die Herstellung einer Dispersion eines Blocknischpolymerisats (A)

In einem Stahlreaktor, wie er üblicherweise für die Herstellung von Dispersionen verwendet wird, ausgestattet mit einem Rührer, einem Rückflußkühler und einem Zulaufgefäß wurden 1361,7 Gewichtsteile deionisiertes Wasser und 240 Gewichtsteile der Dispersion gemäß Herstellbeispiel 1 vorgelegt und unter Rühren auf 75 °C erhitzt. Hiernach wurde aus dem Zulaufgefäß innerhalb sechs Stunden eine Mischung aus 260 Gewichtsteile n-Butylmethacrylat, 208 Gewichtsteile Styrol, 334 Gewichtsteile Hydroxyethylmethacrylat und 234,4 Gewichtsteile Ethylhexylmethacrylat hinzu dosiert. Die resultierende Reaktionsmischung wurde während zwei Stunden bei 75 °C gerührt. Anschließend wurde die resultierende Dispersion unter 40 °C abgekühlt und durch einen 50µm-GAF-Beutel abfiltriert. Die Dispersion (A) wies einen Festkörpergehalt von 42,3 Gew.-% (1 Stunde, 130 °C) und einem Gehalt an freien Monomeren von weniger als 0,2 Gew.-% (bestimmt durch Gaschromatographie) auf.

### Herstellbeispiel 3

### Die Herstellung einer wäßrigen Dispersion von Nanopartikeln (B)

100 Gewichtsteile pyrogenes Siliziumdioxid (Aerosil ® 150 der Firma Degussa) wurden in 600 Gewichtsteilen deionisiertem Wasser mit Hilfe von 1060 Gewichtsteilen Glasperlen (SAZ Perlen, 1,6 bis 2,5 mm, vorbehandelt) während 30 Minuten gemahlen. Anschließend wurden die Glasperlen abgetrennt.

### Beispiel 1

### Die Herstellung einer erfindungsgemäßen Dispersion

135 Gewichtsteile der wäßrige Dispersion (B) des Herstellbeispiels 3 und 900 Gewichtsteile der Dispersion (A) des Herstellbeispiels 2 wurden in einer Labormühle mit mit Hilfe von 1725 Gewichtsteilen Glasperlen (SAZ Perlen, 1,6 bis 2,5 mm, vorbehandelt) während 1,5 Stunden gemahlen. Anschließend wurde von den Glasperlen abgetrennt, und die resultierende Dispersion wurde durch einen 30 µm-Sieb filtriert.

Die erfindungsgemäße Dispersion war über Monate hinweg lagerstabil und konnte problemlos transportiert werden. Sie konnte als Beschichtungsstoff, Klebstoff oder Dichtungsmasse verwendet werden. Sie war einfach zu applizieren und zeigte einen hervorragenden Verlauf. Auch an senkrechten Flächen kann es nicht zum Ablaufen von Material.

### Beispiel 2

### Die Verwendung der erfindungsgemäßen Dispersion als Klarlack

Die erfindungsgemäße Dispersion des Beispiels wurde mit Hilfe einer Kastenrakel auf Glasplatten appliziert. Die resultierenden Naßschichten wurden während 20 Minuten bei 140 °C eingebrannten. Es resultierten Klarlackierungen mit einer Dicke von 40 µm, die einen gleichmäßigen Verlauf, eine glatte Oberfläche einen hohen Glanz und eine hohe Transparenz aufwiesen. Die Klarlackierungen waren frei von Trübungen, Stippen und Oberflächenstörungen wie Orangenhautstrukturen, Krater oder Nadelstiche.

Die Kratzfestigkeit wurde mit Hilfe des in der Fachwelt bekannten Amtec-Tests nach einer Alterung der erfindungsgemäßen Mehrschichtlackierungen während sieben Tagen bei Raumtemperatur bestimmt. Es resultierte eine Abnahme des Glanzgrades (20 °) von 20.

Die Chemikalienfestigkeit wurde mit Hilfe des in der Fachwelt bekannten MB-Gradientenofentests nach einer Alterung der Klarlackierungen während 72 Stunden bei Raumtemperatur bestimmt. Hierbei zeigten 1%ige Schwefelsäure bei 50 °C, Pankreatin bei 48 °C, Baumharz bei 60 °C und deionisiertes Wasser erst über 70 °C eine erste Markierung.

## Patentansprüche

1. Wässrige Dispersionen mit einem Gehalt flüchtiger organischer Verbindungen von < 2 Gew.-%, bezogen auf die Dispersion, enthaltend
(A) mindestens ein Blockmischpolymerisat, herstellbar durch zwei-oder mehrstufige radikalische Copolymerisation in einem wässrigen Medium von
(a) mindestens einem olefinisch ungesättigten Monomer, ausgewählt aus der Gruppe bestehend aus hydrophilen und hydrophoben olefinisch ungesättigten Monomeren, und
(b) mindestens einem vom olefinisch ungesättigten Monomer (a) verschiedenen olefinisch ungesättigten Monomer der allgemeinen Formel I
**R¹R²C=CR³R⁴** (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl -oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
und
(B) hydrophile Nanopartikel.

2. Dispersionen nach Anspruch 1, **dadurch gekennzeichnet, dass** das Blockmischpolymerisat (A) durch zweistufige radikalische Blockmischpolymerisation herstellbar ist.

3. Dispersionen nach Anspruch 1 oder 2, **dadurch gekennzeichnet, dass** das Blockmischpolymerisat (A) herstellbar ist, indem man
(i) in einer ersten Stufe mindestens ein Monomer (a) und mindestens ein Monomer (b) in einem wässrigen Medium radikalisch polymerisiert, wonach man
(ii) in mindestens einer weiteren Stufe das resultierende Copolymerisat mit mindestens einem weiteren Monomer (a) unter radikalischen Bedingungen umsetzt.

4. Dispersionen nach einem der Ansprüche 1 bis 3, **dadurch gekennzeichnet, dass** das Blockmischpolymerisat (A) herstellbar ist, indem man in der ersten Stufe (i) mindestens ein Monomer (b) mit mindestens einem hydrophilen Monomer (a) zu einem Copolymerisat umsetzt.

5. Dispersionen nach Anspruch 4, **dadurch gekennzeichnet, dass** das Blockmischpolymerisat (A) herstellbar ist, indem man in mindestens einer weiteren Stufe (ii) das resultierende Copolymerisat mit mindestens einem weiteren Monomer (a) unter radikalischen Bedingungen in Abwesenheit eines Initiators der radikalischen Polymerisation umsetzt.

6. Dispersionen nach Anspruch 4, **dadurch gekennzeichnet, dass** das Blockmischpolymerisat (A) herstellbar ist, indem man in mindestens einer weiteren Stufe (ii) das resultierende Copolymerisat mit mindestens einem hydrophoben Monomer (a) umsetzt.

7. Dispersionen nach einem der Ansprüche 1 bis 6, **dadurch gekennzeichnet, dass** es sich bei den Arylresten R¹, R², R³ und/oder R⁴ der Monomeren (b) um Phenyl- oder Naphthylreste handelt.

8. Dispersionen nach Anspruch 7, **dadurch gekennzeichnet, dass** es sich um Phenylreste handelt.

9. Dispersionen nach einem der Ansprüche 1 bis 8, **dadurch gekennzeichnet, dass** die Substituenten in den Resten R¹, R², R³ und/oder R⁴ der Monomeren (b) aus der Gruppe, bestehend aus elektronenziehenden oder elektronenschiebenden Atomen oder organischen Resten, ausgewählt werden.

10. Dispersionen nach Anspruch 9, **dadurch gekennzeichnet, dass** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl-, Aryl-, Alkylaryl-, Cycloalkylaryl-, Arylalkyl- und Arylcycloalkylreste; Aryloxy-, Alkyloxy- und Cycloalkyloxyresten; Arylthio-, Alkylthio- und Cycloalkylthioresten und primären, sekundären und/oder tertiären Aminogruppen, ausgewählt werden.

11. Dispersionen nach einem der Ansprüche 1 bis 10, **dadurch gekennzeichnet, dass** das hydrophile Monomer (a) mindestens eine funktionelle Gruppe (f) enthält, die aus der Gruppe, bestehend aus
(f1) funktionellen Gruppen, die durch Neutralisationsmittel in Anionen überführt werden können, und anionischen Gruppen,
oder
(f2) funktionellen Gruppen, die durch Neutralisationsmittel und/oder Quaternisierungsmittel in Kationen überführt werden können, und kationischen Gruppen,
und
(f3) nichtionischen hydrophilen Gruppen,
ausgewählt wird.

12. Dispersionen nach Anspruch 11, **dadurch gekennzeichnet, dass** die funktionellen Gruppen (f1) aus der Gruppe, bestehend aus Carbonsäure-, Sulfonsäure- und Phosphonsäuregruppen, sauren Schwefelsäure- und Phosphorsäureestergruppen sowie Carboxylat-, Sulfonat-, Phosphonat-, Sulfatester- und Phosphatestergruppen, die funktionellen Gruppen (f2) aus der Gruppe, bestehend aus primären, sekundären und tertiären Aminogruppen, primären, sekundären, tertiären und quaternären Ammoniumgruppen, quaternären Phosphoniumgruppen und tertiären Sulfoniumgruppen, und die funktionellen Gruppen (f3) aus der Gruppe, bestehend aus omega-Hydroxy- und omega-Alkoxy-poly(alkylenoxid)-1-yl-Gruppen, ausgewählt werden.

13. Dispersionen nach Anspruch 11 oder 12, **dadurch gekennzeichnet, dass** die Neutralisationsmittel für die in Anionen umwandelbaren funktionellen Gruppen (f1) aus der Gruppe, bestehend aus Ammoniak, Trimethylamin, Triethylamin, Tributylamin, Dimethylanilin, Diethylanilin, Triphenylamin, Dimethylethanolamin, Diethylethanolamin, Methyldiethanolamin, 2-Aminomethylpropanol, Dimethylisopropylamin, Dimethylisopropanolamin, Triethanolamin, Diethylentriamin und Triethylentetramin, und die Neutralisationsmittel für die in Kationen umwandelbaren funktionellen Gruppen (f2) aus der Gruppe, bestehend aus Schwefelsäure, Salzsäure, Phosphorsäure, Ameisensäure, Essigsäure, Milchsäure, Dimethylolpropionsäure und Zitronensäure, ausgewählt werden.

14. Dispersionen nach einem der Ansprüche 1 bis 13, **dadurch gekennzeichnet, dass** die hydrophoben Monomere (a) aus der Gruppe, bestehend aus
(1) säuregruppenfreien Ester olefinisch ungesättigter Säuren;
(2) Monomeren, welche mindestens eine Hydroxylgruppe oder Hydroxymethylaminogruppe pro Molekül tragen und im wesentlichen säuregruppenfrei sind;
(3) Vinylestern von in alpha-Stellung verzweigten Monocarbonsäuren mit 5 bis 18 Kohlenstoffatome im Molekül;
(4) cyclischen und/oder acyclischen Olefinen;
(5) Amiden von alpha, beta-olefinisch ungesättigten Carbonsäuren;
(6) Epoxidgruppen enthaltenden Monomeren;
(7) vinylaromatischen Kohlenwasserstoffen;
(8) Nitrilen;
(9) Vinylverbindungen, ausgewählt aus der Gruppe, bestehend Vinylhalogeniden, N-Vinylamiden, Vinylethern und Vinylestern;
(10) Allylverbindungen, ausgewählt aus der Gruppe, bestehend aus Allylethern und -estern;
(11) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; und
(12) Carbamat- oder Allophanatgruppen enthaltende Monomere; ausgewählt wird oder werden.

15. Dispersionen nach einem der Ansprüche 1 bis 14, **dadurch gekennzeichnet, dass** die Dispersionen, bezogen auf ihren Festkörper, 0,1 bis 20 Gew.-% der hydrophilen Nanopartikel (B) enthalten.

16. Verfahren zur Herstellung von wässrigen Dispersionen mit einem Gehalt flüchtiger organischer Verbindungen von < 2 Gew.-%, bezogen auf die Dispersion, gemäß einem der Ansprüche 1 bis 15, **dadurch gekennzeichnet, dass** man
(1) mindestens eine wässrige Dispersion mit einem Gehalt flüchtiger organischer Verbindungen von < 2 Gew.-%, bezogen auf die Dispersion, enthaltend
(A) mindestens ein Blockmischpolymerisat, herstellbar durch zwei-oder mehrstufige radikalische Copolymerisation in einem wässrigen Medium von
a) mindestens einem olefinisch ungesättigten Monomer, ausgewählt aus der Gruppe, bestehend aus hydrophilen und hydrophoben olefinisch ungesättigten Monomeren, und
b) mindestens einem vom olefinisch ungesättigten Monomer (a) verschiedenen olefinisch ungesättigten Monomer der allgemeinen Formel I
**R¹R²C=CR³R⁴** (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
(2) mit mindestens einer Art von hydrophilen Nanopartikeln (B) vermischt.

17. Verfahren nach Anspruch 16, **dadurch gekennzeichnet, dass** die hydrophilen Nanopartikel (B) in der Form mindestens einer wässrigen Dispersion mit einem Gehalt flüchtiger organischer Verbindungen von < 2 Gew.-%, bezogen auf die Dispersion mindestens einer Art von hydrophilen Nanopartikeln (B) vermischt werden.

18. Verfahren nach Anspruch 17, **dadurch gekennzeichnet, dass** die wässrigen Dispersionen mit einem Gehalt flüchtiger organischer Verbindungen von < 2 Gew.-%, bezogen auf die Dispersion mindestens einer Art von hydrophilen Nanopartikeln (B) durch Nassvermahlung hergestellt werden.

19. Verwendung der Dispersionen gemäß einem der Ansprüche 1 bis 15 und/oder der gemäß einem der Ansprüche 16 bis 18 hergestellten Dispersionen als Beschichtungsstoffe, Klebstoffe und Dichtungsmassen oder zu deren Herstellung.

20. Verwendung nach Anspruch 19, **dadurch gekennzeichnet, dass** die Beschichtungsstoffe, Klebstoffe und Dichtungsmassen für das Lackieren, Verkleben und Abdichten von Kraftfahrzeugkarosserien und Teile hiervon, Bauwerken im Innen- und Außenbereich, Türen, Fenstern und Möbeln sowie für das Lackieren, Verkleben und Abdichten im Rahmen der industriellen Lackierung, inklusive Coils, Container, elektrotechnische Bauteile und weiße Ware, verwendet werden.

## Claims

1. Aqueous dispersions having a volatile organic compound content of <2% by weight, based on the dispersion, comprising
(A) at least one block copolymer preparable by two-stage or multistage free-radical copolymerization in an aqueous medium of
(a) at least one olefinically unsaturated monomer selected from the group consisting of hydrophilic and hydrophobic olefinically unsaturated monomers, and
(b) at least one olefinically unsaturated monomer different than the olefinically unsaturated monomer (a) and of the general formula I
**R¹R²C=CR³R⁴** (I)
in which the radicals R1, R2, R3 and R4 each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R1, R2, R3 and R4 are substituted or unsubstituted aryl, arylalkyl or arylcycloalkyl radicals, especially substituted or unsubstituted aryl radicals;
and
(B) hydrophilic nanoparticles.

2. Dispersions according to Claim 1, **characterized in that** the block copolymer (A) is preparable by two-stage free-radical block copolymerization.

3. Dispersions according to Claim 1 or 2, **characterized in that** the block copolymer (A) is preparable by
(i) subjecting in a first stage at least one monomer (a) and at least one monomer (b) to free-radical polymerization in an aqueous medium, and then
(ii) in at least one further stage, reacting the resulting copolymer with at least one further monomer (a) under free-radical conditions.

4. Dispersions according to any of Claims 1 to 3, **characterized in that** the block copolymer (A) is preparable by reacting in the first stage (i) at least one monomer (b) with at least one hydrophilic monomer (a) to give a copolymer.

5. Dispersions according to Claim 4, **characterized in that** the block copolymer (A) is preparable by reacting in at least one further stage (ii) the resulting copolymer with at least one further monomer (a) under free-radical conditions in the absence of a free-radical polymerization initiator.

6. Dispersions according to Claim 4, **characterized in that** the block copolymer (A) is preparable by reacting in at least one further stage (ii) the resulting copolymer with at least one hydrophobic monomer (a).

7. Dispersions according to any of Claims 1 to 6, **characterized in that** the aryl radicals R1, R2, R3 and/or R4 of the monomers (b) comprise phenyl or naphthyl radicals.

8. Dispersions according to Claim 7, **characterized in that** said radicals comprise phenyl radicals.

9. Dispersions according to any of Claims 1 to 8, **characterized in that** the substituents in the radicals R1, R2, R3 and/or R4 of the monomers (b) are selected from the group consisting of electron withdrawing and electron donating atoms and organic radicals.

10. Dispersions according to Claim 9, **characterized in that** the substituents are selected from the group consisting of halogen atoms, nitrile, nitro, partially or fully halogenated alkyl, cycloalkyl, alkylcycloalkyl, cycloalkylalkyl, aryl, alkylaryl, cycloalkylaryl, arylalkyl and arylcycloalkyl radicals; aryloxy, alkyloxy and cycloalkyloxy radicals; arylthio, alkylthio, and cycloalkylthio radicals, and primary, secondary and/or tertiary amino groups.

11. Dispersions according to any of Claims 1 to 10, **characterized in that** the hydrophilic monomer (a) contains at least one functional group (f) selected from the group consisting of
(f1) functional groups convertible into anions by neutralizing agents, and anionic groups,
or
(f2) functional groups convertible into cations by neutralizing agents and/or quaternizing agents, and cationic groups,
and
(f3) nonionic hydrophilic groups.

12. Dispersions according to Claim 11, **characterized in that** the functional groups (f1) are selected from the group consisting of carboxylic acid, sulfonic acid and phosphoric acid groups, acid sulfuric and phosphoric ester groups, and carboxylate, sulfonate, phosphonate, sulfate ester, and phosphate ester groups; the functional groups (f2) are selected from the group consisting of primary, secondary, and tertiary amino groups, primary, secondary, tertiary and quaternary ammonium groups, quaternary phosphonium groups and tertiary sulfonium groups; and the functional groups (f3) are selected from the group consisting of omega-hydroxy- and omega-alkoxy-poly(alkylene oxid)-1-yl groups.

13. Dispersions according to Claim 11 or 12, **characterized in that** the neutralizing agents for the functional groups (f1) convertible into anions are selected from the group consisting of ammonia, trimethylamine, triethylamine, tributylamine, dimethylaniline, diethylaniline, triphenylamine, dimethylethanolamine, diethylethanolamine, methyldiethanolamine, 2-aminomethylpropanol, dimethyl-isopropylamine, dimethylisopropanolamine, triethanolamine, diethylenetriamine and triethylenetetramine, and the neutralizing agents for the functional groups (f2) convertible into cations are selected from the group consisting of sulfuric acid, hydrochloric acid, phosphoric acid, formic acid, acetic acid, lactic acid, dimethylolpropionic acid, and citric acid.

14. Dispersions according to any of Claims 1 to 13, **characterized in that** the hydrophobic monomers (a) are selected from the group consisting of
(1) esters of olefinically unsaturated acids, said esters being free of acid groups;
(2) monomers which carry per molecule at least one hydroxyl group or hydroxymethylamino group and are substantially free of acid groups;
(3) vinyl esters of alpha-branched monocarboxylic acids having from 5 to 18 carbon atoms in the molecule;
(4) cyclic and/or acyclic olefins;
(5) amides of alpha,beta-olefinically unsaturated carboxylic acids;
(6) monomers containing epoxide groups;
(7) vinylaromatic hydrocarbons;
(8) nitriles;
(9) vinyl compounds selected from the group consisting of vinyl halides, N-vinylamides, vinyl ethers, and vinyl esters;
(10) allyl compounds selected from the group consisting of allyl ethers and allyl esters;
(11) polysiloxane macromonomers having a number average molecular weight Mn of from 1,000 to 40,000 and containing on average from 0.5 to 2.5 ethylenically unsaturated double bonds per molecule; and
(12) monomers containing carbamate or allophanate groups.

15. Dispersions according to any of Claims 1 to 14, chacterized in that the dispersions contain from 0.1 to 20% by weight of the hydrophilic nanoparticles (B), based on their solids.

16. Process for preparing aqueous dispersions having a volatile organic compound content of <2% by weight, based on the dispersion, according to any of Claims 1 to 15, **characterized in that**
(1) at least one aqueous dispersion having a volatile organic compound content of <2% by weight, based on the dispersion, comprising
(A) at least one block copolymer preparable by two-stage or multistage free-radical copolymerization in an aqueous medium of
a) at least one olefinically unsaturated monomer selected from the group consisting of hydrophilic and hydrophobic olefinically unsaturated monomers, and
b) at least one olefinically unsaturated monomer different than the olefinically unsaturated monomer (a) and of the general formula I
**R¹R²C=CR³R⁴** (I)
in which the radicals R1, R2, R3 and R4 each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R1, R2, R3 and R4 are substituted or unsubstituted aryl, arylalkyl or arylcycloalkyl radicals, especially substituted or unsubstituted aryl radicals;
(2) is mixed with at least one kind of hydrophilic nanoparticles (B).

17. Process according to Claim 16, **characterized in that** the hydrophilic nanoparticles (B) are mixed in the form of at least one aqueous dispersion, having a volatile organic compound content of <2% by weight, based on the dispersion, of at least one kind of hydrophilic nanoparticles (B).

18. Process according to Claim 17, **characterized in that** the aqueous dispersions, having a volatile organic compound content of <2% by weight, based on the dispersion, of at least one kind of hydrophilic nanoparticles (B) are prepared by wet grinding.

19. Use of the dispersions according to any of Claims 1 to 15 and/or the dispersions prepared according to any of Claims 16 to 18 as or to prepare coating materials, adhesives and sealing compounds.

20. Use according to Claim 19, **characterized in that** the coating materials, adhesives and sealing compounds are used to coat, bond and seal motor vehicle bodies and parts thereof, buildings inside and outside, doors, windows, and furniture, and also to coat, bond, and seal in the context of industrial coating, including coils, containers, electrical components, and white goods.

## Revendications

1. Dispersions aqueuses ayant une teneur en composés organiques volatils de < 2 % en poids, par rapport à la dispersion, contenant
(A) au moins un copolymérisat séquencé, pouvant être préparé par copolymérisation radicalaire en deux ou plus de deux étapes, dans un milieu aqueux, de
(a) au moins un monomère à insaturation oléfinique, choisi dans le groupe constitué par des monomères à insaturation oléfinique hydrophiles et des monomères à insaturation oléfinique hydrophobes et
(b) au moins un monomère à insaturation oléfinique, différent du monomère à insaturation oléfinique (a), de formule générale I
R¹R²C=CR³R⁴ (I)
dans laquelle les radicaux R¹, R², R³ et R⁴ représentent chacun, indépendamment les uns des autres, des atomes d'hydrogène ou des groupes alkyle, cycloalkyle, alkylcycloalkyle, cycloalkylalkyle, aryle, alkylaryle, cycloalkylaryle, arylalkyle ou arylcycloalkyle, substitués ou non substitués, étant entendu qu'au moins deux des variables R¹, R², R³ et R⁴ représentent des radicaux aryle, arylalkyle ou arylcycloalkyle substitués ou non substitués, en particulier des radicaux aryle substitués ou non substitués ;
et
(B) des nanoparticules hydrophiles.

2. Dispersions selon la revendication 1, **caractérisées en ce que** le copolymérisat séquencé (A) peut être préparé par copolymérisation radicalaire en deux étapes.

3. Dispersions selon la revendication 1 ou 2, **caractérisées en ce qu'**on peut préparer le copolymérisat séquencé (A)
(i) dans une première étape en polymérisant par voie radicalaire au moins un monomère (a) et au moins un monomère (b) dans un milieu aqueux, puis
(ii) dans au moins une autre étape en faisant réagir dans des conditions radicalaires le copolymérisat résultant avec au moins un autre monomère (a).

4. Dispersions selon l'une quelconque des revendications 1 à 3, **caractérisées en ce qu'**on peut préparer le copolymérisat séquencé (A) en convertissant en un copolymérisat dans la première étape (i) au moins un monomère (b) avec au moins un monomère (a) hydrophile.

5. Dispersions selon la revendication 4, **caractérisées en ce qu'**on peut préparer le copolymérisat séquencé (A) en faisant réagir dans au moins une autre étape (ii) le copolymérisat résultant avec au moins un autre monomère (a) dans des conditions radicalaires en absence d'un amorceur de la polymérisation radicalaire.

6. Dispersions selon la revendication 4, **caractérisées en ce qu'**on peut préparer le copolymérisat séquencé (A) en faisant réagir dans au moins une autre étape (ii) le copolymérisat résultant avec au moins un monomère (a) hydrophobe.

7. Dispersions selon l'une quelconque des revendications 1 à 6, **caractérisées en ce que** les radicaux aryle R¹, R², R³ et/ou R⁴ des monomères (b) consistent en des radicaux phényle ou naphtyle.

8. Dispersions selon la revendication 7, **caractérisées en ce qu'**il s'agit de radicaux phényle.

9. Dispersions selon l'une quelconque des revendications 1 à 8, **caractérisées en ce que** dans les radicaux R¹, R², R³ et/ou R⁴ des monomères (b) les substituants sont choisis dans le groupe constitué par des radicaux organiques ou des atomes attirant les électrons ou repoussant les électrons.

10. Dispersions selon la revendication 9, **caractérisées en ce que** les substituants sont choisis dans le groupe constitué par des atomes d'halogène, des radicaux nitrile, nitro, des radicaux alkyle, cycloalkyle, alkylcycloalkyle, cycloalkylalkyle, aryle, alkylaryle, cycloalkylaryle, arylalkyle et arylcycloalkyle, partiellement ou totalement halogénés ; des radicaux aryloxy, alkyloxy et cycloalkyloxy ; des radicaux arylthio, alkylthio et cycloalkylthio et des groupes amino primaires, secondaires et/ou tertiaires.

11. Dispersions selon l'une quelconque des revendications 1 à 10, **caractérisées en ce que** le monomère (a) hydrophile contient au moins un groupe fonctionnel (f) qui est choisi dans l'ensemble constitué par
(f1) des groupes fonctionnels qui peuvent être convertis en anions au moyen d'agents de neutralisation, et des groupes anioniques,
ou
(f2) des groupes fonctionnels qui peuvent être convertis en cations au moyen d'agents de neutralisation et/ou d'agents de quaternisation, et des groupes cationiques,
et
(f3) des groupes hydrophiles non ioniques.

12. Dispersions selon la revendication 11, **caractérisées en ce que** les groupes fonctionnels (f1) sont choisis dans l'ensemble constitué par les groupes carboxy, sulfo et phosphono, les groupes ester acide d'acide sulfurique et d'acide phosphorique ainsi que les groupes carboxylate, sulfonate, phosphonate, ester sulfate et ester phosphate, les groupes fonctionnels (f2) sont choisis dans l'ensemble constitué par des groupes amino primaires, secondaires et tertiaires, des groupes ammonium primaires, secondaires, tertiaires et quaternaires, des groupes phosphonium quaternaires et des groupes sulfonium tertiaires, et les groupes fonctionnels (f3) sont choisis dans l'ensemble constitué par les groupes oméga-hydroxy- et oméga-alcoxy-poly(oxyalkylène)-1-yle.

13. Dispersions selon la revendication 11 ou 12, **caractérisées en ce que** les agents de neutralisation pour les groupes fonctionnels (f1) convertissables en anions sont choisis dans l'ensemble constitué par l'ammoniac, la triméthylamine, la triéthylamine, la tributylamine, la diméthylaniline, la diéthylaniline, la triphénylamine, la diméthyléthanolamine, la diéthyl-éthanolamine, le méthyldiéthanolamine, le 2-amino-méthylpropanol, la diméthylisopropylamine, la diméthylisopropanolamine, le triéthanolamine, la diéthylènetriamine et la triéthylènetétramine, et les agents de neutralisation pour les groupes fonctionnels (f2) convertissables en cations sont choisis dans l'ensemble constitué par l'acide sulfurique, l'acide chlorhydrique, l'acide phosphorique, l'acide formique, l'acide acétique, l'acide lactique, l'acide diméthylolpropionique et l'acide citrique.

14. Dispersions selon l'une quelconque des revendications 1 à 13, **caractérisées en ce que** les monomères (a) hydrophobes sont choisis dans le groupe constitué par
(1) des esters, exempts de groupes acides, d'acides à insaturation oléfinique ;
(2) des monomères qui portent au moins un groupe hydroxy ou un groupe hydroxyméthylamino par molécule et sont essentiellement exempts de groupes acides ;
(3) des esters vinyliques d'acides monocarboxyliques ramifiés en position alpha, ayant de 5 à 18 atomes de carbone dans la molécule ;
(4) des oléfines cycliques et/ou acycliques ;
(5) des amides d'acides carboxyliques à insaturation alpha,bêta-oléfinique ;
(6) des monomères contenant des groupes époxy ;
(7) des hydrocarbures vinylaromatiques ;
(8) des nitriles ;
(9) des composés vinyliques, choisis dans le groupe constitué par les halogénures de vinyle, les N-vinylamides, les éthers vinyliques et les esters vinyliques ;
(10) des composés allyliques choisis dans le groupe constitué par les éthers et esters allyliques ;
(11) des macromonomères polysiloxane, qui ont une masse moléculaire moyenne en nombre Mn de 1 000 à 40 000 et comportent en moyenne de 0,5 à 2,5 doubles liaisons à insaturation éthylénique par molécule ; et
(12) des monomères contenant des groupes carbamate ou allophanate.

15. Dispersions selon l'une quelconque des revendications 1 à 14, **caractérisées en ce que** les dispersions contiennent, par rapport à leurs solides, de 0,1 à 20 % en poids des nanoparticules hydrophiles (B).

16. Procédé pour la préparation de dispersions aqueuses ayant une teneur en composés organiques volatils de < 2 % en poids, par rapport à la dispersion, selon l'une quelconque des revendications 1 à 15, **caractérisé en ce qu'**on mélange
(1) au moins une dispersion aqueuse ayant une teneur en composés organiques volatils de < 2 % en poids, par rapport à la dispersion, contenant (A) au moins un copolymérisat séquencé, pouvant être préparé par copolymérisation radicalaire en deux ou plus de deux étapes, dans un milieu aqueux, de
(a) au moins un monomère à insaturation oléfinique, choisi dans le groupe constitué par des monomères à insaturation oléfinique hydrophiles et des monomères à insaturation oléfinique hydrophobes et
(b) au moins un monomère à insaturation oléfinique, différent du monomère à insaturation oléfinique (a), de formule générale I
R¹R²C=CR³R⁴ (I)
dans laquelle les radicaux R¹, R², R³ et R⁴ représentent chacun, indépendamment les uns des autres, des atomes d'hydrogène ou des groupes alkyle, cycloalkyle, alkylcycloalkyle, cycloalkylalkyle, aryle, alkylaryle, cycloalkylaryle, arylalkyle ou arylcycloalkyle, substitués ou non substitués, étant entendu qu'au moins deux des variables R¹, R², R³ et R⁴ représentent des radicaux aryle, arylalkyle ou arylcycloalkyle substitués ou non substitués, en particulier des radicaux aryle substitués ou non substitués ;
(2) avec au moins un type de nanoparticules hydrophiles (B).

17. Procédé selon la revendication 16, **caractérisé en ce qu'**on mélange les nanoparticules hydrophiles (B) sous la forme d'au moins une dispersion aqueuse ayant une teneur en composés organiques volatils de < 2% en poids, par rapport à la dispersion d'au moins un type de nanoparticules hydrophiles (B).

18. Procédé selon la revendication 17, **caractérisé en ce que** les dispersions aqueuses ayant une teneur en composés organiques volatils de < 2% en poids, par rapport à la dispersion d'au moins un type de nanoparticules hydrophiles (B), sont préparées par broyage par voie humide.

19. Utilisation des dispersions selon l'une quelconque des revendications 1 à 15 et/ou des dispersions préparées selon l'une quelconque des revendications 16 à 18, en tant que matières de revêtement, matières adhésives et matières d'étanchéité ou pour leur production.

20. Utilisation selon la revendication 19, **caractérisée en ce que** les matières de revêtement, matières adhésives et matières d'étanchéité sont utilisées pour le peinturage, le collage et l'étanchéification de carrosseries de véhicules automobiles et de parties de ceux-ci, de bâtiments à l'intérieur et à l'extérieur, de portes, fenêtres et meubles ainsi que pour le peinturage, le collage et l'étanchéification dans le cadre du peinturage industriel, y compris le peinturage de rubans continus (*coils*), de récipients (*containers*), de composants électroniques et d'appareils électroménagers.
